# EUROPEAN PATENT SPECIFICATION

(11) **EP 4 579 208 B1**
(45) Date of publication and mention of the grant of the patent: **05.11.2025**
(21) Application number: 24215813.7
(22) Date of filing: 27.11.2024
(51) Int. Cl.: G01M 17/007, B62D 65/00, G05B 19/418, G05D 1/00

(54) **MONITORING DEVICE AND METHOD**
ÜBERWACHUNGSVORRICHTUNG UND -VERFAHREN
DISPOSITIF ET PROCÉDÉ DE SURVEILLANCE

(30) Priority: 25.12.2023 JP 2023218056
(43) Date of publication of application: 02.07.2025
(73) Proprietor: TOYOTA JIDOSHA KABUSHIKI KAISHA, Aichi-ken, 471-8571 (JP)
(72) Inventor: IWAHORI, Kento, Toyota-shi, 471-8571 (JP); SAWANO, Takuro, Toyota-shi, 471-8571 (JP); YOKOYAMA, Daiki, Toyota-shi, 471-8571 (JP)
(74) Representative: J A Kemp LLP

(56) References cited:
- US-A1- 2017 320 529
- US-A1- 2020 333 789

## Description

### BACKGROUND OF THE INVENTION

### 1. Field of the Invention

The present disclosure relates to a monitoring device and a method.

### 2. Description of Related Art

A monitoring device disclosed in Japanese Unexamined Patent Application Publication No. 2019-155951 (JP 2019-155951 A) monitors a torque of a vehicle. US 2020/333789 A1 discloses a method for operating a vehicle, the vehicle driving autonomously or remotely controlled within a manufacturing system for manufacturing vehicles.

### SUMMARY OF THE INVENTION

In a manufacturing process for manufacturing the vehicle, there is a production method of assembling components onto the vehicle in a not-completed state while the vehicle is caused to travel via remote control or autonomous control.

In such a technique, a weight of the vehicle is changed as the components are assembled. Here, when the weight of the vehicle is changed, an appropriate magnitude of an output torque of the vehicle is also changed accordingly. Therefore, in such a technique, it is needed to monitor the output torque of the vehicle in accordance with the change in the weight of the vehicle, and furthermore, a change in the state of the vehicle. However, the technique disclosed in JP 2019-155951 A does not take into account the change in the state of the vehicle and cannot monitor the output torque of the vehicle in accordance with the change in the state of the vehicle.

The present disclosure can be implemented as the following aspects.

A first aspect of the present disclosure, as defined in claim 1, provides a monitoring device that, in a factory in which a plurality of processes for manufacturing a vehicle that travels via unmanned driving is performed, monitors the vehicle that is an object of the processes. The monitoring device includes a process acquisition unit configured to acquire process information on a process as a target among the processes for the vehicle, a torque acquisition unit configured to acquire torque information on an output torque of the vehicle in the process as the target, and a detection unit configured to detect an abnormality in the output torque of the vehicle by using the process information and the torque information.

According to the first aspect of the present disclosure, the abnormality in the output torque of the vehicle is detected by using the process information and the torque information. In the production method of assembling the components while the vehicle in the not-completed state is caused to travel, the output torque of the vehicle can be monitored in accordance with the change in the state of the vehicle.

In the first aspect of the present disclosure, the detection unit may be configured to detect the abnormality in the output torque based on the output torque of the vehicle represented by the torque information, the process represented by the process information, and a torque-related criterion set in association with the process.

According to the first aspect of the present disclosure, the abnormality in the output torque is detected by using the torque-related criterion set in association with the process. Therefore, in the production method of assembling the components while the vehicle in the not-completed state is caused to travel, the output torque of the vehicle can be monitored in accordance with the change in the state of the vehicle.

In the first aspect of the present disclosure, a threshold value of the output torque in the process may be set as the torque-related criterion, and the detection unit may be configured to, when a value of the output torque is greater than the threshold value of the output torque, determine that there is the abnormality in the output torque of the vehicle.

According to the first aspect of the present disclosure, the abnormality in the output torque can be easily detected by using the threshold value of the output torque set for each process.

In the first aspect of the present disclosure, as a first threshold value of the output torque set for a first process among the processes, a value smaller than a second threshold value of the output torque set for a second process that is performed later than the first process may be set.

According to the first aspect of the present disclosure, by setting the threshold value of the output torque in a process that is performed later to be greater than the threshold value in a process that is performed earlier, the abnormality in the output torque can be accurately detected.

In the first aspect of the present disclosure, the torque-related criterion may be a criterion related to a waveform representing the output torque acquired in time series.

According to the first aspect of the present disclosure, the abnormality can be easily detected in the output torque by using the waveform representing a time-series change in the output torque.

In the first aspect of the present disclosure, the monitoring device may further include a control instruction generation unit configured to generate a control instruction for remotely controlling driving of the vehicle and transmit the generated control instruction to the vehicle, in which the detection unit is configured to, when the abnormality in the output torque of the vehicle is detected, notify the control instruction generation unit that the abnormality in the output torque is detected, and the control instruction generation unit is configured to, when being notified of the abnormality in the output torque, generate the control instruction to stop the vehicle or to reduce a traveling speed of the vehicle to a speed lower than a current speed.

According to the first aspect of the present disclosure, the driving control of the vehicle can be appropriately executed by stopping the vehicle or causing the vehicle to travel at a low speed when the abnormality in the output torque is detected.

In the first aspect of the present disclosure, the monitoring device may further include a notification unit configured to, when the detection unit detects the abnormality in the output torque of the vehicle, notify the vehicle that the abnormality in the output torque of the vehicle is detected.

According to the first aspect of the present disclosure, when the abnormality in the output torque has occurred in a traveling vehicle, the control can be promptly transitioned to appropriate driving control of the vehicle, such as stopping the driving.

A second aspect of the present disclosure, as defined in claim 8, provides a computer-implemented method of, in a factory in which a plurality of processes for manufacturing a vehicle that travels via unmanned driving is performed, monitoring the vehicle that is an object of the processes. The method includes acquiring process information on a process as a target among the processes for the vehicle, acquiring torque information on an output torque of the vehicle in the process as the target, and detecting an abnormality in the output torque of the vehicle by using the process information and the torque information.

According to the second aspect of the present disclosure, the abnormality in the output torque of the vehicle is detected by using the process information and the torque information. In the production method of assembling the components while the vehicle in the not-completed state is caused to travel, the output torque of the vehicle can be monitored in accordance with the change in the state of the vehicle.

The present disclosure can be implemented in various aspects, such as a remote control system, a vehicle control device, a remote autonomous driving method, and a vehicle manufacturing method.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram showing a configuration of a system according to a first embodiment;
FIG. 2 is a block diagram showing the configuration of the system according to the first embodiment;
FIG. 3 is a flowchart showing a processing procedure for traveling control of a vehicle according to the first embodiment;
FIG. 4 is a flowchart showing a processing procedure for monitoring a torque;
FIG. 5 is a diagram showing a torque table;
FIG. 6 is a diagram showing a reason for setting a threshold value for each process;
FIG. 7 is a flowchart showing a processing procedure for monitoring a torque according to a second embodiment;
FIG. 8 is a diagram showing an example of a waveform when an abnormality has occurred in the torque;
FIG. 9 is a flowchart showing a processing procedure for monitoring a torque according to a third embodiment;
FIG. 10 is a diagram showing a schematic configuration of a system according to a fourth embodiment;
FIG. 11 is a flowchart showing a processing procedure for traveling control of a vehicle according to the fourth embodiment; and
FIG. 12 is a flowchart showing a processing procedure for monitoring a torque.

### DETAILED DESCRIPTION OF EMBODIMENTS

### A. First Embodiment:

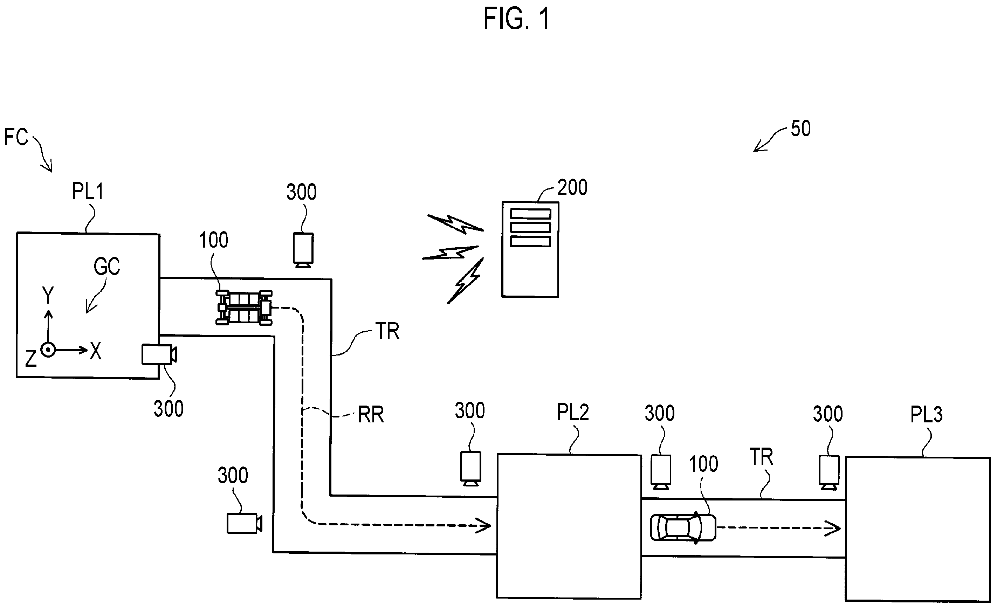

FIG. 1 is a conceptual diagram showing a configuration of a system 50 according to a first embodiment. The system 50 is used in a factory FC that manufactures a vehicle 100. The vehicle 100 is a battery electric vehicle (BEV). The vehicle 100 is a target of a plurality of processes performed in the factory FC. The system 50 includes one or more vehicles 100, a server 200, and a plurality of external sensors 300. The external sensor 300 is a camera that captures an image of the vehicle 100. The server 200 is also referred to as a "monitoring device".

As described above, the vehicle 100 according to the present embodiment is a battery electric vehicle (BEV), but the vehicle that can be applied to the monitoring device and a monitoring method according to the present disclosure is not limited thereto. The vehicle in the present disclosure may be a vehicle that travels using wheels or a vehicle that travels using a caterpillar, and is, for example, a passenger car, a truck, a bus, a two-wheeled vehicle, a four-wheeled vehicle, a tank, and a construction vehicle. The vehicle includes a battery electric vehicle (BEV), a gasoline vehicle, a hybrid electric vehicle, and a fuel cell electric vehicle.

The vehicle 100 can travel via the unmanned driving. The "unmanned driving" means driving that does not depend on a traveling operation of an occupant. The traveling operation means an operation related to at least any one of "traveling", "turning", and "stopping" of the vehicle 100. The unmanned driving is implemented by automatic or manual remote control using a device located outside the vehicle 100 or by autonomous control of the vehicle 100. The occupant who does not perform the traveling operation may get on the vehicle 100 that travels via the unmanned driving. Examples of the occupant who does not perform the traveling operation include a person who simply sits on a seat of the vehicle 100 and a person who performs work different from the traveling operation, such as assembly, inspection, or operation of switches, in a state of getting on the vehicle 100. The driving via the traveling operation of the occupant may be referred to as "manned driving".

In the present specification, the "remote control" includes "complete remote control" in which all the operations of the vehicle 100 are completely decided from the outside of the vehicle 100, and "partial remote control" in which a part of the operations of the vehicle 100 is decided from the outside of the vehicle 100. In addition, the "autonomous control" includes "complete autonomous control" in which the vehicle 100 autonomously controls the operation thereof without receiving any information from an external device of the vehicle 100, and "partial autonomous control" in which the vehicle 100 autonomously controls the operation thereof by using the information received from the external device of the vehicle 100.

The vehicle 100 is in a state of being manufactured and travels via the unmanned driving in the factory FC in which the vehicle 100 is manufactured. A reference coordinate system of the factory FC is a global coordinate system GC. That is, any position in the factory FC is represented by coordinates of X, Y, and Z in the global coordinate system GC. The factory FC includes a first place PL1, a second place PL2, and a third place PL3. The first place PL1, the second place PL2, and the third place PL3 are connected by a track TR on which the vehicle 100 can travel. A plurality of external sensors 300 is installed in the factory FC along the track TR. A position of each external sensor 300 in the factory FC is adjusted in advance. The vehicle 100 moves via the unmanned driving from the first place PL1 to the second place PL2 along the track TR. Further, the vehicle 100 moves from the second place PL2 to the third place PL3 along the track TR.

The first place PL1 is a place at which work of constructing the vehicle 100 is performed. The vehicle 100 constructed at the first place PL1 is in a state where the vehicle 100 can travel via the unmanned driving, in other words, in a state where the vehicle 100 can exhibit three functions of "traveling", "turning", and "stopping" via the unmanned driving.

In the present embodiment, the vehicle 100 constructed at the first place PL1 travels from the first place PL1 to the second place PL2 via the unmanned driving in a form of a platform with a configuration described below.

Specifically, the vehicle 100 need solely include at least the vehicle control device 110 and the actuator group 120, in order to exhibit the three functions of "traveling", "turning", and "stopping" via the unmanned driving. In a case where the vehicle 100 acquires the information from the outside for the unmanned driving, the vehicle 100 need solely further include the communication device 130. That is, the vehicle 100 that can move via the unmanned driving is not mounted with at least a part of interior components, such as a driver's seat and a dashboard, at least a part of exterior components, such as a bumper and a fender mirror, a bodyshell, and the like.

The second place PL2 and the third place PL3 are places in which the work of assembling the components onto the vehicle 100 is performed. At the second place PL2 and the third place PL3, for example, the components are assembled onto the vehicle 100 by an assembly robot or an operator (not shown).

At the second place PL2, a vehicle body, such as the bodyshell and an engine hood, the interior components, such as the seat and the dashboard, and the exterior components, such as the bumper and the fender, are assembled onto the vehicle 100 having the form of the platform by, for example, the assembly robot. Each component may be mounted from any direction, such as the upper side, the lower side, the front side, the rear side, the right side, or the left side of the vehicle 100, and may be mounted from the same direction or different directions. At the third place PL3, a functional unit is attached to the vehicle 100, for example, by the operator. The functional unit is, for example, a plurality of ECUs.

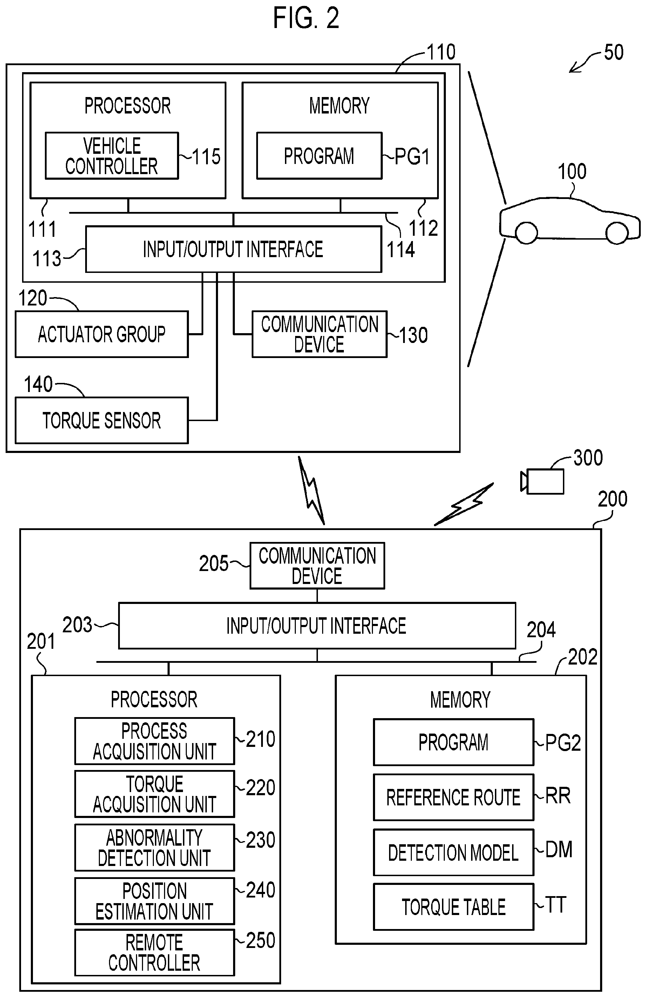

FIG. 2 is a block diagram showing the configuration of the system 50. The vehicle 100 includes a vehicle control device 110 that controls each unit of the vehicle 100, an actuator group 120 including one or more actuators that are driven under control of the vehicle control device 110, a communication device 130 that communicates with an external device, such as a server 200, via wireless communication, and a torque sensor 140.

The actuator group 120 includes an actuator of a drive device for accelerating the vehicle 100, an actuator of a steering device for changing a traveling direction of the vehicle 100, and an actuator of a braking device for decelerating the vehicle 100.

The vehicle control device 110 is configured by a computer including a processor 111, a memory 112, an input/output interface 113, and an internal bus 114. The processor 111, the memory 112, and the input/output interface 113 are connected to be bidirectionally communicable with each via the internal bus 114. The actuator group 120, the communication device 130, and the torque sensor 140 are connected to the input/output interface 113.

The processor 111 executes a program PG1 stored in the memory 112 to implement various functions including functions as a vehicle controller 115.

The torque sensor 140 is provided on a drive shaft of the vehicle 100 and detects a torque acting on the drive shaft. The torque acting on the drive shaft is also referred to as an "output torque". As the torque sensor 140, a torque sensor of a magnetostrictive type, a strain gauge type, a capacitive type, and the like can be used. The torque sensor 140 outputs an electric signal representing the detected torque to the processor 111.

The vehicle controller 115 can cause the vehicle 100 to travel by controlling the actuator group 120 using a traveling control signal received from the server 200. The traveling control signal is a control signal for causing the vehicle 100 to travel. In the present embodiment, the traveling control signal includes the acceleration and a steering angle of the vehicle 100 as parameters. Alternatively, the traveling control signal may include a speed of the vehicle 100 as the parameter instead of or in addition to the acceleration of the vehicle 100. The vehicle controller 115 is also referred to as a "control instruction generation unit". The traveling control signal is also referred to as a "control instruction".

In addition, the vehicle controller 115 transmits a torque value, which is based on the electric signal representing the torque supplied from the torque sensor 140, to the server 200 via the communication device 130.

The server 200 is configured by a computer including a processor 201, a memory 202, an input/output interface 203, and an internal bus 204. The processor 201, the memory 202, and the input/output interface 203 are connected to be bidirectionally communicable with each via the internal bus 204.

A communication device 205 for communicating with various devices outside the server 200 is connected to the input/output interface 203. The communication device 205 can communicate with the vehicle 100 via wireless communication, and can communicate with each external sensor 300 via wired communication or wireless communication. That is, the server 200 can communicate with the vehicle 100 and the external sensors 300 via the communication device 205.

The memory 202 stores a program PG2, a reference route RR indicating a route along which the vehicle 100 should travel, a detection model DM described later, a torque table TT described later, and the like in advance.

The processor 201 executes the program PG2 stored in the memory 202 to implement various functions including functions as a process acquisition unit 210, a torque acquisition unit 220, an abnormality detection unit 230, a position estimation unit 240, and a remote controller 250.

The process acquisition unit 210 acquires process information on a process as a target, for the vehicle 100. In the present embodiment, the process as the target refers to a current process at which the vehicle 100 is located. Here, the process information represents the current process at which the vehicle 100 is located. The process information includes, for example, a process number for specifying the current process and a process name that represents the current process.

For example, the process acquisition unit 210 acquires process information representing the process at which the vehicle 100 is currently located from a host server. After each process is performed, for example, the operator uses a terminal device to output notification of the process end to the host server. Therefore, the host server has the most recently completed process for the vehicle 100.

The torque acquisition unit 220 acquires torque information on a torque of the vehicle 100 from the vehicle 100. Here, the torque information represents a current torque of the vehicle 100. In the present specification, the torque of the vehicle 100 refers to the torque acting on the drive shaft in the torque needed for the vehicle to travel. In other words, the torque of the vehicle 100 refers to a torque generated by a motor that drives the drive shaft of the vehicle 100.

The abnormality detection unit 230 determines whether the torque output by the vehicle 100 corresponds to the current process by using the process information and the torque information, thereby detecting the abnormality in the torque of the vehicle 100. The abnormality detection unit 230 is also referred to as a "detection unit".

The position estimation unit 240 estimates a position and a direction of the vehicle 100 by using the detection result output from the external sensor 300. Alternatively, the position estimation unit 240 may estimate solely one of the position or the direction of the vehicle 100 by using the detection result output from the external sensor 300. In this case, for example, the other of the position and the direction of the vehicle 100 is decided by using a traveling history of the vehicle 100.

The remote controller 250 acquires a detection result of the sensor, generates the traveling control signal for controlling the actuator group 120 of the vehicle 100 by using the detection result, and transmits the traveling control signal to the vehicle 100 to cause the vehicle 100 to travel via the remote control. The remote controller 250 may generate, for example, a control signal for controlling various accessories provided in the vehicle 100 or actuators for operating various kinds of equipment, such as a wiper, a power window, or a lamp, in addition to the traveling control signal, and output the generated control signal. That is, the remote controller 250 may operate the various kinds of equipment or the various accessories via the remote control. In the present specification, the "remote control" includes "complete remote control" in which all the operations of the vehicle 100 are completely decided from the outside of the vehicle 100, and "partial remote control" in which a part of the operations of the vehicle 100 is decided from the outside of the vehicle 100.

The external sensor 300 is a sensor located outside the vehicle 100. The external sensor 300 is a sensor that captures the vehicle 100 from the outside of the vehicle 100. The external sensor 300 includes a communication device (not shown), and can communicate with other devices, such as the server 200, via wired communication or wireless communication. Specifically, the external sensor 300 is configured by a camera installed in the premises of the factory. The camera serving as the external sensor 300 captures a captured image including the vehicle 100 and outputs the captured image as the detection result.

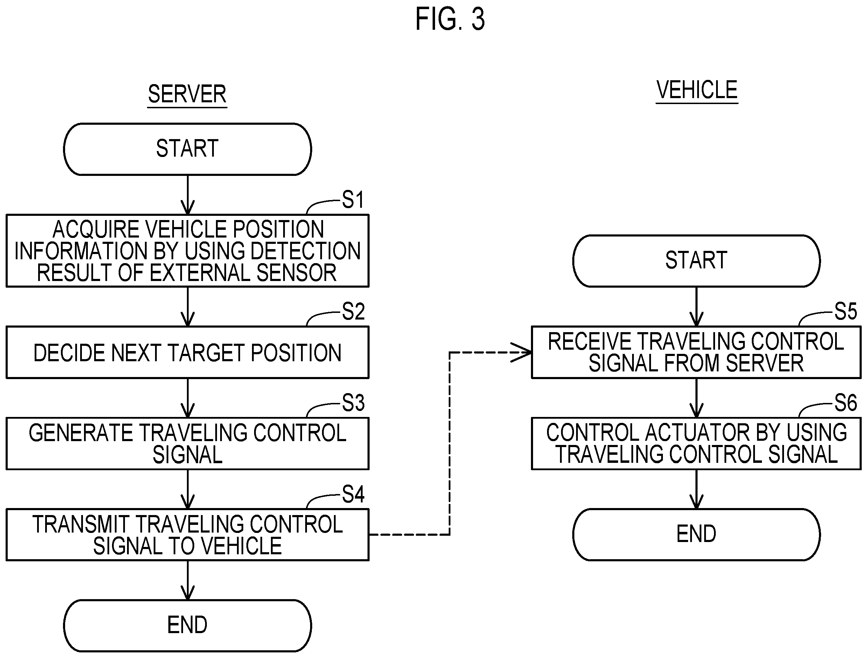

FIG. 3 is a flowchart showing a processing procedure for the traveling control of the vehicle 100. The processing shown in FIG. 3 is executed by the processor 201 of the server 200 functioning as the remote controller 250, and the processor 111 of the vehicle 100 functioning as the vehicle controller 115. The processing shown in FIG. 3 is repeatedly executed at predetermined time intervals, for example, from a point in time when the vehicle 100 starts traveling via the remote control.

In step S1, the processor 201 of the server 200 acquires the vehicle position information of the vehicle 100 by using the detection result output from the external sensor 300. The vehicle position information is position information that is a basis for generating the traveling control signal. In the present embodiment, the vehicle position information includes the position and the direction of the vehicle 100 in the global coordinate system GC of the factory FC. Specifically, in step S1, the processor 201 acquires the vehicle position information by using the captured image acquired from the camera as the external sensor 300.

Specifically, in step S1, the processor 201 detects an outer shape of the vehicle 100 from, for example, the captured image, calculates coordinates of positioning points of the vehicle 100 in a captured image coordinate system, that is, in a local coordinate system, and converts the calculated coordinates into the coordinates in the global coordinate system GC to acquire the position of the vehicle 100. The outer shape of the vehicle 100 included in the captured image can be detected, for example, by inputting the captured image to a detection model DM utilizing artificial intelligence. The detection model DM is prepared, for example, inside the system 50 or outside the system 50, and is stored in advance in the memory 202 of the server 200. Examples of the detection model DM include a trained machine learning model that has been trained to implement any one of semantic segmentation and instance segmentation. As the machine learning model, for example, a convolutional neural network (CNN) that has been trained by supervised learning using a training data set can be used. The training data set has, for example, a plurality of training images including the vehicle 100 and a label indicating whether each area in the training image is an area indicating the vehicle 100 or an area indicating an area other than the vehicle 100. When the CNN is trained, it is preferable that parameters of the CNN are updated such that an error between an output result of the detection model DM and the label is reduced by backpropagation (error backpropagation method). The processor 201 can acquire the direction of the vehicle 100 by performing the estimation based on a direction of a movement vector of the vehicle 100 calculated from a positional change in a feature point of the vehicle 100 between frames of the captured image by using, for example, an optical flow method.

In step S2, the processor 201 of the server 200 decides a target position to which the vehicle 100 should head next. In the present embodiment, the target position is represented by the coordinates of X, Y, and Z in the global coordinate system GC. The reference route RR that is a route along which the vehicle 100 should travel is stored in advance in the memory 202 of the server 200. The route is represented by a node indicating a departure point, a node indicating a passing point, a node indicating a destination, and a link connecting the respective nodes. The processor 201 decides the target position to which the vehicle 100 should head next by using the vehicle position information and the reference route RR. The processor 201 decides the target position on the reference route RR ahead of the current position of the vehicle 100.

In step S3, the processor 201 of the server 200 generates the traveling control signal for causing the vehicle 100 to travel toward the decided target position. The processor 201 calculates the traveling speed of the vehicle 100 from the transition of the position of the vehicle 100, and compares the calculated traveling speed with a target speed. As a whole, the processor 201 decides the acceleration such that the vehicle 100 is accelerated when the traveling speed is lower than the target speed, and decides the acceleration such that the vehicle 100 is decelerated when the traveling speed is higher than the target speed.

Here, the processor 201 decides the acceleration that generates the torque corresponding to the weight of the vehicle 100. In the present embodiment, the components are assembled onto the vehicle 100 that travels in a state of being manufactured. As the components are assembled, the state of the vehicle 100, including the overall weight of the vehicle 100, the weight distribution, and other factors, is changed. Since the torque needed for the vehicle 100 to travel varies in accordance with the change in the state of the vehicle 100.

The processor 201 decides the steering angle and the acceleration such that the vehicle 100 does not deviate from the reference route RR when the vehicle 100 is located on the reference route RR, and decides the steering angle and the acceleration such that the vehicle 100 returns to the reference route RR when the vehicle 100 is not located on the reference route RR, in other words, when the vehicle 100 deviates from the reference route RR.

In step S4, the processor 201 of the server 200 transmits the generated traveling control signal to the vehicle 100. The processor 201 repeatedly executes, at a predetermined cycle, the acquisition of the position of the vehicle 100, the decision of the target position, the generation of the traveling control signal, and the transmission of the traveling control signal.

In step S5, the processor 111 of the vehicle 100 receives the traveling control signal transmitted from the server 200. In step S6, the processor 111 of the vehicle 100 controls the actuator group 120 by using the received traveling control signal, to cause the vehicle 100 to travel at the acceleration and the steering angle represented by the traveling control signal. The processor 111 repeatedly executes, at a predetermined cycle, the reception of the traveling control signal and control of the actuator group 120. With the system 50 according to the present embodiment, the vehicle 100 can be caused to travel by the remote control, and the vehicle 100 can move without using a transport facility, such as a crane or a conveyor.

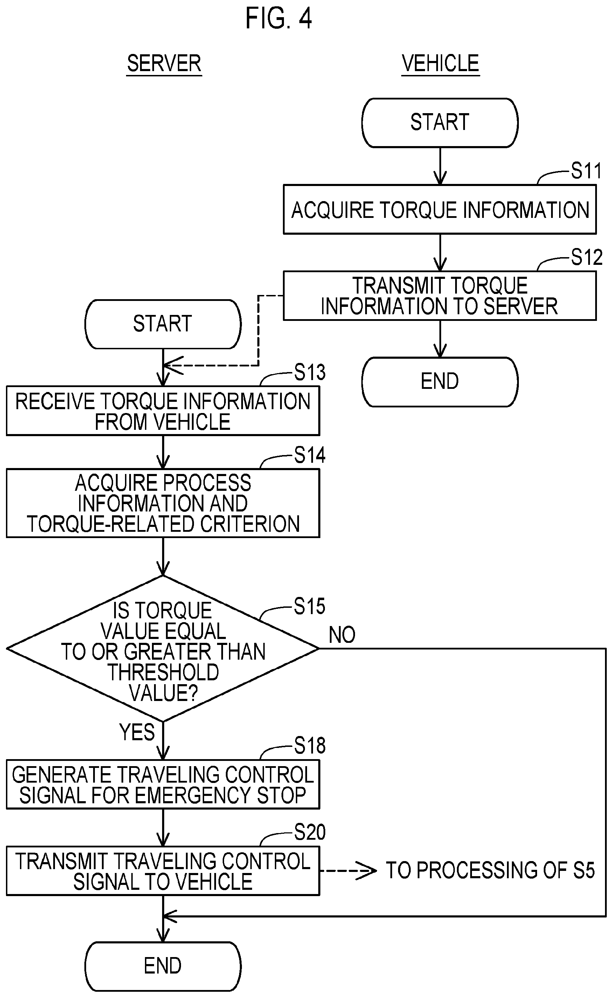

FIG. 4 is a flowchart showing a processing procedure for monitoring the torque. By executing the processing shown in FIG. 4, the torque of the vehicle 100 that is traveling is monitored. The processing shown in FIG. 4 is executed by the processor 111 functioning as the vehicle controller 115, and the processor 201 functioning as the process acquisition unit 210, the torque acquisition unit 220, and the abnormality detection unit 230.

In step S11, the processor 111 of the vehicle 100 acquires the torque value acting on drive wheels of the vehicle 100, based on the electric signal representing the torque supplied from the torque sensor 140, as the torque information.

In step S12, the processor 111 transmits a signal indicating the torque value acting on the drive wheels of the vehicle 100 as the torque information to the server 200. The processor 111 repeatedly executes the processing of steps S11 and S12 at predetermined time intervals, for example, from a point in time when the vehicle 100 starts traveling via the remote control.

In step S13, the processor 201 of the server 200 receives the torque value as the torque information from the vehicle 100. The processing after step S13 is executed each time the server 200 receives the torque information from the vehicle 100.

In step S14, the processor 201 inquires the host server (not shown) about the process information for the vehicle 100 and information on a torque-related criterion, thereby acquiring the process information for the vehicle 100 and the information on the torque-related criterion set in association with the process, from the host server. The process information represents the current process at which the vehicle 100 is located. The torque-related criterion is also referred to as a "torque-related criterion set in association with the process".

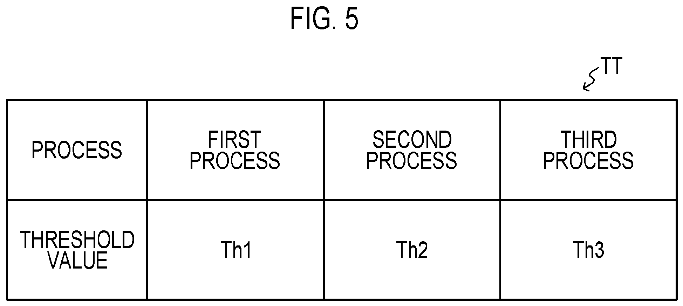

In addition, the torque-related criterion defines whether the torque output by the vehicle 100 corresponds to the current process. In the present embodiment, a threshold value of the torque is set for each process in the torque-related criterion. FIG. 5 is a diagram showing the torque table TT that defines the threshold value of the torque. The torque table TT represents the association between the process that is performed on the vehicle 100 and the threshold value of the torque of the vehicle 100 in the process. The torque table TT is, for example, stored in advance in a memory provided in the host server.

The threshold value of the torque set for each process represents an upper limit value that is undesirable for the torque of the vehicle 100 to exceed in each process. In the example shown in FIG. 5, the threshold value of the torque of the vehicle 100 are defined for each of first to third processes. Since the threshold value of the torque is set for each process, it is possible to accurately detect the abnormality in the output torque in accordance with the process. In step S14, the host server transmits, for example, the threshold value of the torque of the process as the target to the server 200 in response to the inquiry from the processor 201. The torque table TT may also be stored in the memory 202 of the server 200. In this case, in step S14, the processor 201 need solely inquire the host server about the process information representing the process at which the vehicle 100 is located.

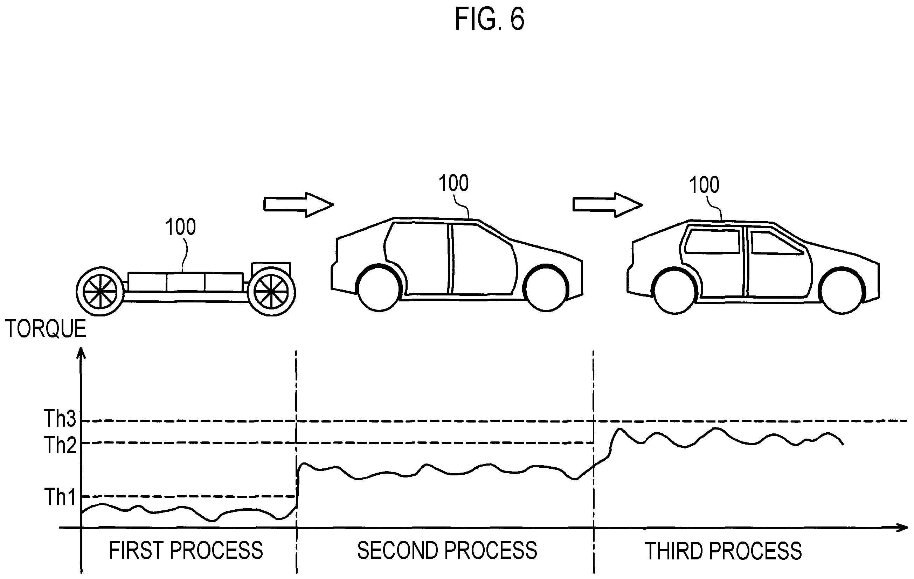

FIG. 6 is a diagram showing a reason for setting the threshold value of the torque for each process. As described above, the components are assembled onto the vehicle 100 that travels in a state of being manufactured. Therefore, as the components are assembled, the weight of vehicle 100 is increased. Therefore, in the process at which the vehicle 100 is located, that is, the torque needed for the vehicle 100 to travel varies depending on the weight of the vehicle 100. Further, the weight of the vehicle 100 in the second process that is performed later than the first process is greater than the weight of the vehicle 100 in the first process. Therefore, the torque needed for vehicle 100 to travel in the second process that is performed later is greater than the torque needed for vehicle 100 to travel in the first process. Further, the weight of the vehicle 100 in the third process that is performed later than the second process is greater than the weight of the vehicle 100 in the second process. Therefore, the torque needed for the vehicle 100 to travel in the third process is greater than the torque needed for the vehicle 100 to travel in the second process. In the present embodiment, in order to respond to the change in the weight of the vehicle 100, a different value is set for each process as the threshold value of the torque of the vehicle 100.

Further, as the threshold value of the torque set for a certain process, a value smaller than the threshold value of the torque set for a process that is performed later than the process is set. The threshold value of the torque in the first process is denoted by Th1, the threshold value of the torque in the second process is denoted by Th2, and the threshold value of the torque in the third process is denoted by Th3. The threshold value Th1 of the torque in the first process is also referred to as a "first threshold value". The threshold value Th2 of the torque in the second process is also referred to as a "second threshold value". The threshold value Th2 in the second process is set to a value greater than the threshold value Th1 in the first process. In addition, the threshold value Th3 in the third process is set to a value greater than the threshold value Th2 in the second process. As described above, the threshold value of the torque set for a certain process is set to a value greater than the threshold value of the torque set for a process that is performed earlier than the process. In the production method of assembling the components onto the vehicle 100 in a not-completed state, since the weight of the vehicle 100 is gradually increased, the threshold value of the torque in a certain process is set to be greater than the threshold value in a process that is performed earlier than the process, so that the abnormality in the torque can be accurately detected.

The weight of the vehicle 100 at the completion of each process is determined based on the type, the number, and the like of the components assembled onto the vehicle 100 during the process. The torque needed for the vehicle 100 to travel can be calculated based on the weight of the vehicle 100 at the completion of each process. The threshold value of the torque for each process set in the torque table TT shown in FIG. 5 is set in accordance with the torque needed for the vehicle 100 to travel in each process.

In the present embodiment, the process at which the vehicle 100 is located is determined as follows. For example, in the example shown in FIG. 1, the first process is performed at the first place PL1, the second process is performed at the second place PL2, and the third process is performed at the third place PL3.

In a case where the first process is completed for the vehicle 100, the assembly of the components onto the vehicle 100 in the first process is completed. In this case, the current process of the vehicle 100 is determined as the first process. Even in a case where the vehicle 100 is traveling on the track TR connecting the first place PL1 and the second place PL2, the first process is completed, and thus the current process of the vehicle 100 is determined as the first process.

In addition, in a case where the vehicle 100 enters the second place PL2 and the second process is started, but the second process is not yet completed, the first process is at least completed. In this case, the current process of the vehicle 100 is determined as the first process.

In a case where the second process is completed for the vehicle 100, the assembly of the components onto the vehicle 100 in the second process is completed. In this case, the current process of the vehicle 100 is determined as the second process. Even in a case where the vehicle 100 is traveling on the track TR connecting the second place PL2 and the third place PL3, the second process is completed, and thus the current process of the vehicle 100 is determined as the second process.

In addition, in a case where the vehicle 100 enters the third place PL3 and the third process is started, but the third process is not yet completed, the second process is at least completed. In this case, the current process of the vehicle 100 is determined as the second process.

When the third process is completed for the vehicle 100, the assembly of the components onto the vehicle 100 in the third process is completed. In this case, the current process of the vehicle 100 is determined as the third process.

In step S15 shown in FIG. 4, the processor 201 determines whether there is the abnormality in the torque of the vehicle 100 based on whether the torque value supplied from the vehicle 100 is equal to or greater than the threshold value set for the current process. For example, it is assumed that the current process is the first process. In this case, the processor 201 determines whether the torque value supplied from the vehicle 100 is equal to or greater than the threshold value Th1 set for the first process. The processor 201 determines that there is the abnormality in the torque when the torque value is equal to or greater than the threshold value Th1. In addition, the processor 201 determines that there is no abnormality in the torque when the torque value is less than the threshold value Th1.

When the processor 201 determines that the torque value is equal to or greater than the set threshold value, that is, determines that there is the abnormality in the torque (step S15; YES), the processor 201 executes the processing of step S18. On the other hand, when the processor 201 determines that the torque value is less than the set threshold value, that is, the torque is normal (step S15; NO), the processing shown in FIG. 4 ends.

In step S18, the processor 201 generates a traveling control signal for emergency stop of the vehicle 100. The traveling control signal for emergency stop instructs the vehicle 100 to stop traveling. The traveling control signal includes a target stop point, target deceleration, a target steering angle, and the like calculated by using the current position of the vehicle 100, the traveling speed of the vehicle 100, and the like.

In step S20, the processor 201 transmits the generated traveling control signal for emergency stop to the vehicle 100. The processor 111 of the vehicle 100 receives the traveling control signal transmitted from the server 200, as in step S5 of FIG. 3. The processor 111 of the vehicle 100 controls the driving of the vehicle 100 in accordance with the traveling control signal, as in step S6 of FIG. 3. As a result, the vehicle 100 is stopped. In the present embodiment, the processor 201 changes the control contents of the vehicle 100 by stopping the traveling of the vehicle 100 when the abnormality has occurred in the torque of the vehicle 100. In this way, appropriate driving control of the vehicle 100 can be executed in response to the occurrence of the abnormality in the output torque.

In the present embodiment, the abnormality of the torque is detected based on whether the torque of the vehicle 100 corresponds to the current process. Therefore, in the production method of assembling the components while the vehicle 100 in the not-completed state is caused to travel, the output torque of the vehicle can be monitored in accordance with the change in the state of the vehicle 100. In addition, the abnormality of the output torque can be easily detected by using the threshold value of the output torque set for each process. In the vehicle 100 that performs the unmanned driving via the remote control, when the abnormality has occurred in the torque, appropriate driving control of the vehicle, such as stopping the unmanned driving via the remote control, can be executed.

### B. Second Embodiment:

In a second embodiment, a configuration different from the first embodiment will be mainly described, and the description of the configuration that is the same as that in the first embodiment will be omitted.

In the second embodiment, a torque-related criterion that is different from that in the first embodiment is used to determine whether there is the abnormality in the torque. In the second embodiment, a determination is made that there is the abnormality in the torque when at least a part of a waveform representing a time-series change in the torque of the vehicle 100 matches a preset pattern shape.

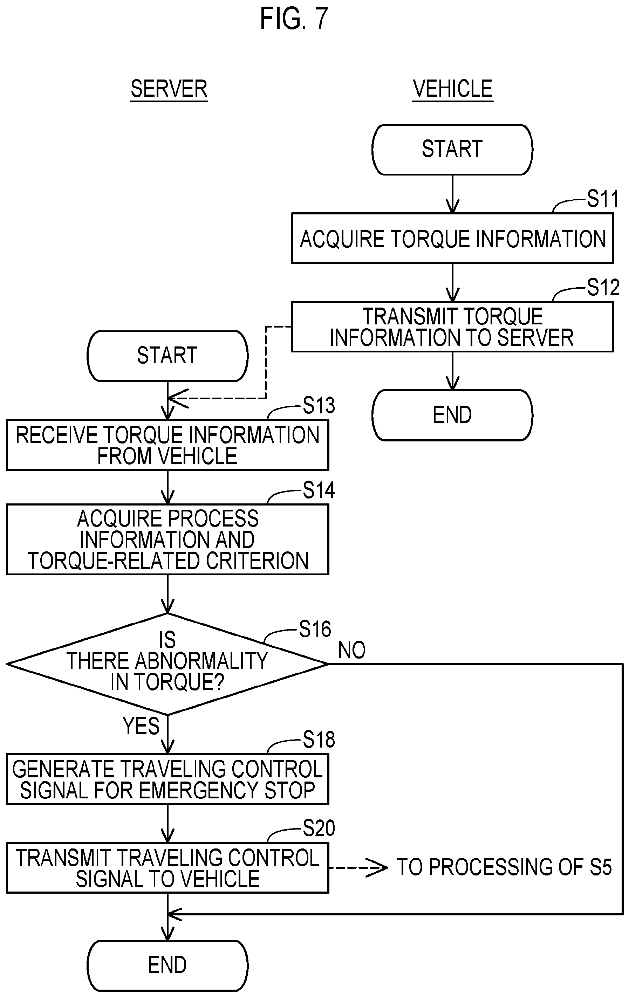

FIG. 7 is a flowchart showing a processing procedure for monitoring the torque in the second embodiment. By executing the processing shown in FIG. 7, the torque of the vehicle 100 that is traveling is monitored. The processing shown in FIG. 7 is executed by the processor 111 functioning as the vehicle controller 115, and the processor 201 functioning as the process acquisition unit 210, the torque acquisition unit 220, and the abnormality detection unit 230. In FIG. 7, the processing that is the same as that in the first embodiment is denoted by the same reference numeral. Further, the processing of steps S11 to S14 is the same as that in the first embodiment, and thus the description will be omitted.

In step S16, whether there is the abnormality in the torque is determined by using the waveform representing the time-series change in the torque. Specifically, first, the processor 201 generates the waveform representing the time-series change in the torque by using the torque values received from the vehicle 100 over a certain period going back from the present.

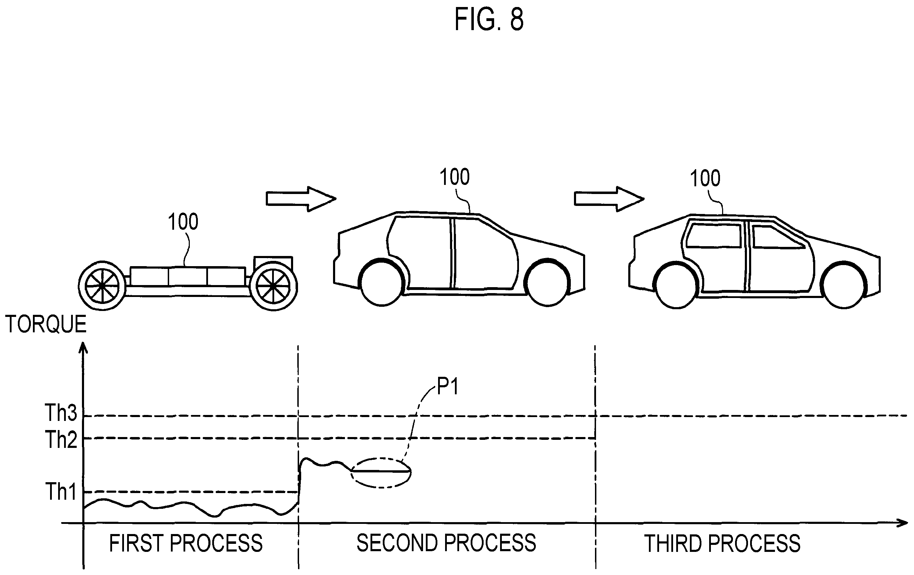

FIG. 8 is a diagram showing an example of the waveform when the abnormality has occurred in the torque. The processor 201 determines that there is the abnormality in the torque when at least a part of the waveform representing the time-series change in the torque includes a part that corresponds to the preset pattern shape. In the present embodiment, the set pattern shape is a linear shape. In the example shown in FIG. 8, within a range P1 enclosed by a two-dot chain line in the second process, a part of the waveform representing the change in the torque has a linear shape.

In step S16 shown in FIG. 7, when the processor 201 determines that there is the abnormality in the torque (step S16; YES), the processor 201 executes the processing of step S18. On the other hand, when the processor 201 determines that the torque is normal (step S18; NO), the processing shown in FIG. 7 ends. Steps S18 and S20 are the same as those in the first embodiment, and thus the description will be omitted.

In the present embodiment, the criterion for determining whether there is the abnormality is that the waveform representing the output torque acquired in time series does not correspond to the preset pattern shape. Therefore, the abnormality in the output torque can be easily detected by using the waveform representing the time-series change in the torque. In the production method of assembling the components while the vehicle in the not-completed state is caused to travel, the output torque of the vehicle 100 can be monitored in accordance with the change in the state of the vehicle 100. In the vehicle 100 that performs the unmanned driving via the remote control, when the abnormality has occurred in the torque, appropriate driving control of the vehicle, such as stopping the unmanned driving via the remote control, can be executed.

### C. Third Embodiment:

In the first embodiment and the like, the server 200 automatically generates the traveling control signal to be transmitted to the vehicle 100. Alternatively, the processor 201 may generate the traveling control signal to be transmitted to the vehicle 100 based on an operation of an external operator located outside the vehicle 100. For example, the external operator may operate an operation device including a display that displays the captured image output from the external sensor 300, a steering wheel, an accelerator pedal, and a brake pedal for remotely operating the vehicle 100, and a communication device that communicates with the server 200 via wired communication or wireless communication, and the server 200 may generate the traveling control signal in response to the operation applied to the operation device.

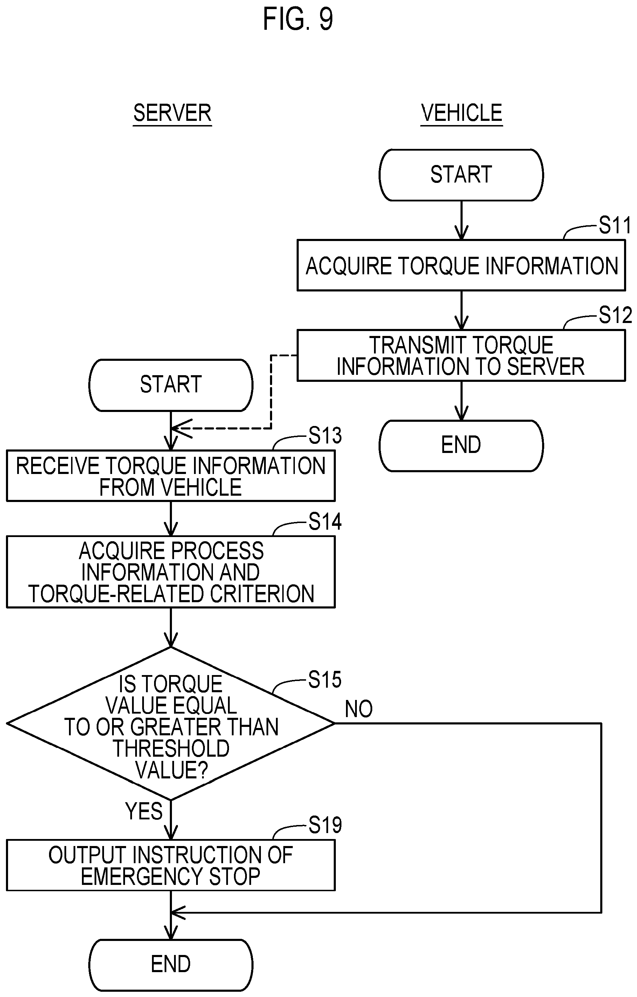

FIG. 9 is a flowchart showing a processing procedure for monitoring the torque according to a third embodiment. The processing shown in FIG. 9 is executed by the processor 111 functioning as the vehicle controller 115, and the processor 201 functioning as the process acquisition unit 210, the torque acquisition unit 220, and the abnormality detection unit 230. In FIG. 9, the processing that is the same as that in the first embodiment is denoted by the same reference numeral. Further, the processing from steps S11 to S15 is the same as that in the first embodiment, and thus the description will be omitted.

When the processor 201 determines that there is the abnormality in the torque (step S15; YES), the processor 201 executes the processing of step S19. Specifically, the processor 201 determines that there is the abnormality in the torque when the torque value is equal to or greater than the threshold value set for the current process. On the other hand, when the processor 201 determines that there is no abnormality in the torque (step S15; NO), the processing shown in FIG. 9 ends.

In step S19, since the abnormality has occurred in the torque, the processor 201 outputs an image for sending notification that there is the abnormality in the torque and sending an instruction to make the emergency stop of the vehicle 100, to the display used by the operator to remotely operate the vehicle 100. As a result, the operator stops the traveling of the vehicle 100 in accordance with the emergency stop instruction. Thereafter, the processing shown in FIG. 9 ends.

In the present embodiment, as in the first embodiment, the abnormality in the output torque of the vehicle 100 is detected based on whether the output torque corresponds to the current process, and thus the output torque of the vehicle 100 can be monitored in accordance with the change in the state of the vehicle 100 in the production method of assembling the components while the vehicle in the not-completed state is caused to travel. In the vehicle 100 that performs the unmanned driving via the remote control, when the abnormality has occurred in the torque, appropriate driving control of the vehicle, such as stopping the unmanned driving via the remote control, can be executed.

### D. Fourth Embodiment:

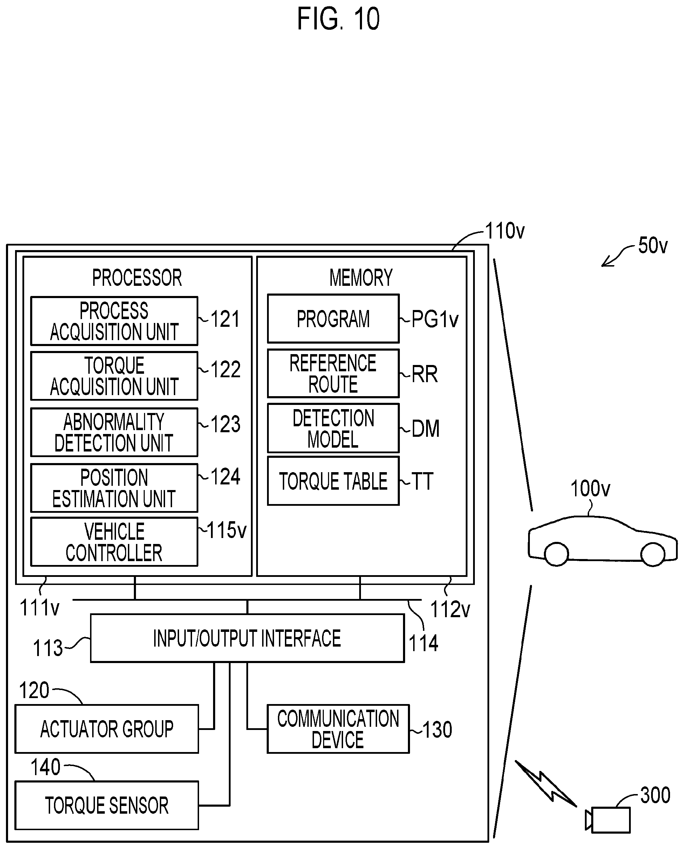

FIG. 10 is a diagram showing a schematic configuration of a system 50v according to a fourth embodiment. In the present embodiment, the system 50v is different from that in the first embodiment in that the server 200 is not provided. In addition, the vehicle 100v according to the present embodiment can travel via the autonomous control of the vehicle 100v. Other configurations are the same as the configurations of the first embodiment unless otherwise described. The vehicle control device 110v is configured by a computer including a processor 111v, a memory 112v, an input/output interface 113, and an internal bus 114. Hereinafter, a configuration different from the first embodiment will be mainly described, and the description of the same configuration will be omitted.

The memory 112v stores a program PG1v, the reference route RR indicating the route along which the vehicle 100 should travel, the detection model DM, the torque table TT, and the like in advance.

In the present embodiment, the processor 111v of the vehicle control device 110v executes the program PG1v stored in the memory 112v to function as a vehicle controller 115v, a process acquisition unit 121, a torque acquisition unit 122, an abnormality detection unit 123, and a position estimation unit 124.

The vehicle controller 115v can acquire the output result of the sensor, generate the traveling control signal by using the output result, and output the generated traveling control signal to operate the actuator group 120, thereby causing the vehicle 100v to travel via the autonomous control.

The process acquisition unit 121 acquires the process information representing the current process at which the vehicle 100 is located, in the similar manner as the process acquisition unit 210 according to the first embodiment. The torque acquisition unit 122 acquires the torque information on the torque of the vehicle 100, in the similar manner as the torque acquisition unit 220 according to the first embodiment. The abnormality detection unit 123 detects the abnormality in the torque of vehicle 100 by determining whether the torque output by vehicle 100 corresponds to the current process by using the process information and the torque information, in the similar manner as the abnormality detection unit 230 according to the first embodiment. The position estimation unit 124 estimates the position and the direction of the vehicle 100 by using the detection result output from the external sensor 300, in the similar manner as the position estimation unit 240 according to the first embodiment.

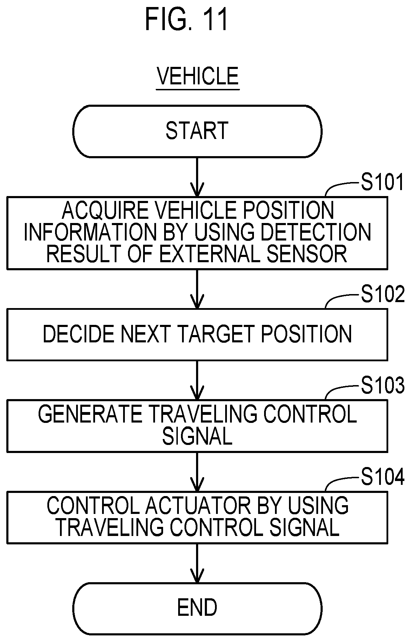

FIG. 11 is a flowchart showing a processing procedure of traveling control of the vehicle 100v according to the fourth embodiment. The processor 111v functioning as the vehicle controller 115v executes the processing shown in FIG. 11.

In step S101, the processor 111v acquires the vehicle position information using the detection result output from the camera that is the external sensor 300. In step S102, the processor 111v decides the target position to which the vehicle 100v should head next. In step S103, the processor 111v generates the traveling control signal for causing the vehicle 100v to travel toward the decided target position. In step S104, the processor 111v controls the actuator group 120 by using the generated traveling control signal, to cause the vehicle 100v to travel in accordance with the parameters represented by the traveling control signal. The processor 111v repeatedly executes, at a predetermined cycle, the acquisition of the vehicle position information, the decision of the target position, the generation of the traveling control signal, and the control of the actuator. With the system 50v according to the present embodiment, the vehicle 100v can be caused to travel via the autonomous control of the vehicle 100v without the need for the server 200 to remotely control the vehicle 100v.

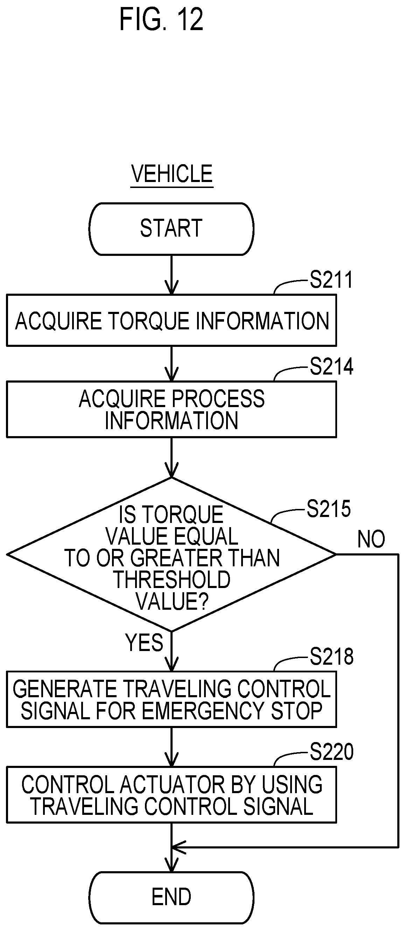

FIG. 12 is a flowchart showing a processing procedure for monitoring the torque. The processing shown in FIG. 12 is executed by the processor 111v functioning as the vehicle controller 115v, the process acquisition unit 121, the torque acquisition unit 122, and the abnormality detection unit 123.

In step S211, the processor 111v acquires the torque value acting on drive wheels of the vehicle 100, based on the electric signal representing the torque supplied from the torque sensor 140, as the torque information. The processor 111v repeatedly executes the processing after step S211 at predetermined time intervals, for example, from a point in time when the vehicle 100 starts traveling.

In step S214, the processor 111v acquires the process information of the vehicle 100 by inquiring the host server (not shown) about the process information of the vehicle 100. The process information represents the current process at which the vehicle 100 is located.

In step S215, the processor 111v determines whether there is the abnormality in the torque of the vehicle 100 based on whether the torque value is equal to or greater than the threshold value set for the current process by referring to the torque table TT stored in the memory 112v. When the processor 111v determines that the torque value is equal to or greater than the threshold value set for the current process (step S215; YES), the processor 111v executes the processing of step S218. On the other hand, when the processor 111v determines that the torque value is less than the threshold value (step S215; NO), the processing shown in FIG. 12 ends.

In step S218, the processor 111v generates the traveling control signal for emergency stop of the vehicle 100. The traveling control signal includes a target stop point, target deceleration, a target steering angle, and the like calculated by using the current position of the vehicle 100, the traveling speed of the vehicle 100, and the like.

In step S220, the processor 111v controls the actuator group 120 by using the generated traveling control signal, to stop the traveling of the vehicle 100v in accordance with the parameters represented by the traveling control signal. In the present embodiment as well, the vehicle 100v is stopped when the abnormality has occurred in the torque of the vehicle 100v. Therefore, appropriate driving control of the vehicle 100v can be executed. In addition, the abnormality in the torque is detected based on whether the torque of the vehicle 100v corresponds to the current process. Therefore, in the production method of assembling the components while the vehicle 100v in the not-completed state is caused to travel, the output torque of the vehicle can be appropriately monitored in accordance with the change in the state of the vehicle 100v. In addition, the abnormality of the output torque can be easily detected by using the threshold value of the output torque set for each process. In the vehicle 100 that performs autonomous unmanned driving, when the abnormality has occurred in the torque, appropriate driving control of the vehicle, such as stopping the autonomous unmanned driving, can be executed.

### E. Other Embodiments:

(E1) In the second embodiment, the example is described in which the pattern shape set for the waveform representing the time-series change in the torque in order to detect the abnormality of the torque is a linear shape. In addition, another shape can be adopted as the set pattern shape. For example, a needle-shaped waveform representing a rapid change in the torque within a very short preset period may be used. In this case, the waveform may represent that the torque is rapidly increased and then is decreased, or represent that the torque is rapidly decreased and then is increased. A plurality of pattern shapes may be defined to detect the abnormality in the torque. In the configurations according to the first embodiment, the third embodiment, and the fourth embodiment, the method of detecting the abnormality in the torque described in another embodiment (E1) may be adopted.

In the second embodiment, regardless of the process, whether a part of the waveform representing the time-series change in the torque corresponds to the preset pattern shape is determined. However, when the pattern shapes are defined, a combination of the pattern shapes used to detect the abnormality may be difference for each process.

(E2) In addition, a method of detecting the abnormality in the torque when a part of the waveform representing the time-series change in the torque described in the second embodiment corresponds to the preset pattern shape, and a method of detecting the abnormality in the torque by using the set threshold value described in the first embodiment, may be used in combination. Similarly, in the configurations according to the third embodiment and the fourth embodiment, the two above-described methods may also be used in combination.

(E3) In addition, for example, when the rapid change in the torque occurs, a determination may be made that there is the abnormality in the torque. Specifically, when a slope of the waveform representing the time-series change in the torque (slope of a tangent at a certain point) is equal to or greater than a threshold value, a determination may be made that there is the abnormality in the torque.

For example, it is assumed that a time needed to reach a target value of the torque in the first process and a time needed to reach the target value of the torque in the second process are substantially the same. In this case, the slope of the waveform representing the change in the torque in the second process that is performed later tends to be greater than the slope of the waveform representing the change in the torque in the first process that is performed earlier. When the weight of the vehicle 100 before the first process and the weight of the vehicle 100 after the first process are compared, the weight of the vehicle 100 after the first process is greater. Therefore, the torque needed for the vehicle 100 to travel after the first process is performed is greater. Therefore, it is desirable to set a threshold value for the slope of the waveform in accordance with the weight of the vehicle, that is, in accordance with the process. Specifically, the threshold value for the slope of the waveform in the process that is performed later is greater than the threshold value for the slope of the waveform in the process that is performed earlier. In the first embodiment, the third embodiment, and the fourth embodiment, the method of detecting the abnormality in the torque described in another embodiment (E3) may be adopted.

(E4) In the first embodiment, the second embodiment, and the fourth embodiment, the example is described in which the processor 201 as the remote controller 250 transmits the traveling control signal for emergency stop of the vehicle 100 to the vehicle 100 when there is the abnormality in the torque, thereby making the emergency stop of the vehicle 100. Alternatively, the processor 201 may generate a traveling control signal for sending an instruction of the deceleration of the vehicle 100 and transmit the generated traveling control signal to the vehicle 100. In this case, it is desirable that the speed after the deceleration is very low. The vehicle 100 that receives the traveling control signal travels while being decelerated. The processor 201 changes the control contents of the vehicle 100 by causing the vehicle 100 to travel at a low speed when the abnormality has occurred in the torque of the vehicle 100. In this way, appropriate driving control of the vehicle 100 can be executed in response to the occurrence of the abnormality in the output torque.

Alternatively, the processor 201 may transmit a traveling control signal for sending an instruction of the deceleration of the vehicle 100 to the vehicle 100, and then transmit a traveling control signal for sending an instruction of the stop of the vehicle 100 to the vehicle 100 after elapse of a certain time. In this case, the vehicle 100 is first decelerated and then is stopped. When the abnormality has occurred in the torque of the vehicle 100, the processor 201 can execute appropriate driving control of the vehicle 100 by causing the vehicle 100 to travel at a low speed.

(E5) In the fourth embodiment, the configuration is described in which the vehicle 100v itself detects the abnormality in the output torque. Alternatively, the processor 201 functioning as the abnormality detection unit 230 of the server 200 described in the first embodiment may detect the abnormality in the output torque of the vehicle 100v. In this case, the vehicle controller 115v of the vehicle 100v periodically transmits the torque value, which is based on the electric signal representing the torque supplied from the torque sensor 140, to the server 200.

When the processor 201 of the server 200 determines that there is the abnormality in the torque of the vehicle 100v, the processor 201 of the server 200 sends notification that the abnormality in the torque is detected instead of generating the traveling control signal for emergency stop as described in the first embodiment. In this case, the processor 201 functions as a notification unit that sends notification that the abnormality in the torque of the vehicle 100v is detected. Further, the processor 201 may notify the host server of the abnormality in the torque of the vehicle 100v. The host server may notify the operator of the current position of the vehicle 100v and the occurrence of the abnormality in the torque. As a result, for example, the operator can promptly perform the needed procedures on the vehicle 100v after the stop.

In the case where the vehicle 100v is notified by the server 200 that the abnormality in the torque of the vehicle 100v is detected, the vehicle 100v stops traveling, and thus the control contents of the vehicle 100v are changed. Alternatively, the vehicle 100v may change the control contents to the low-speed traveling. When the abnormality has occurred in the torque in the vehicle 100v driven autonomously, appropriate driving control of the vehicle, such as stopping the autonomous driving, can be executed.

(E6) In the first embodiment and the second embodiment, when the server 200 detects the abnormality in the torque, the server 200 outputs a signal indicating the detection of the abnormality in the torque by transmitting the traveling control signal for emergency stop to the vehicle 100. Alternatively, the server 200 may output the signal indicating the detection of the abnormality in the torque by transmitting the traveling control signal for emergency stop to the vehicle 100 and notifying the host server or the operator in the factory FC that the abnormality in the torque is detected. As a result, for example, the operator can promptly perform the needed procedures on the vehicle 100v after the stop.

In the third embodiment, the server 200 may output the signal indicating the detection of the abnormality in the torque by sending notification of an instruction of the emergency stop of the vehicle 100 and notifying the host server or the operator in the factory FC that the abnormality in the torque is detected. As a result, for example, the operator can promptly perform the needed procedures on the vehicle 100v after the stop.

In the fourth embodiment, the vehicle 100v may output the signal indicating the detection of the abnormality in the torque by executing emergency stop control of the vehicle 100 and notifying the host server or the operator in the factory FC that the abnormality in the torque is detected. As a result, for example, the operator can promptly perform the needed procedures on the vehicle 100v after the stop.

(E7) In the first embodiment, the example is described in which, since the weight of the vehicle 100 is gradually increased, the threshold value of the torque in a certain process is set to be greater than the threshold value in a process that is performed earlier than the process.

However, the threshold value of the torque in a certain process may be smaller than the threshold value in a process that is performed earlier than the process. For example, in a certain process A, the operator may assemble the components while being in the vehicle 100. At the completion of the process A, the operator gets off the vehicle 100. In a process B that is performed later than the process A, the robot may perform the assembly work of the component without getting in the vehicle 100. In this case, the weight of the vehicle 100 in the process B is smaller than the weight of the vehicle 100 in which the operator gets in the process A that is performed earlier than the process B. In such a case, the threshold value of the torque is set for each process in accordance with an assumed weight of the vehicle 100 or a combined weight of the vehicle 100 and the operator.

(E8) In addition, in the torque table TT shown in FIG. 5, the upper limit value of the torque is set as the threshold value. However, in the torque table TT, both the upper limit value and the lower limit value of the torque may be set as the threshold values. The lower limit value represents a threshold value that is undesirable for the torque of the vehicle 100 to fall below in each process. In this case, the server 200 can detect the abnormality in the torque even when there is no torque needed for the traveling in the corresponding process.

(E9) In each of the above-described embodiments, the external sensor 300 is the camera. In contrast, the external sensor 300 does not always have to be the camera; for example, the external sensor 300 may be a light detection and ranging (LiDAR) as a distance measurement device. In this case, the detection result output by the external sensor 300 may be three-dimensional point cloud data representing the vehicle 100. In this case, the server 200 or the vehicle 100 may acquire the vehicle position information via template matching using the three-dimensional point cloud data as the detection result, and reference point cloud data prepared in advance.

(E10) In the first embodiment, the server 200 executes the processing from the acquisition of the vehicle position information to the generation of the traveling control signal. On the other hand, the vehicle 100 may execute at least a part of the processing from the acquisition of the vehicle position information to the generation of the traveling control signal. For example, the following forms (1) to (3) may be used.
(1) The server 200 may acquire the vehicle position information, decide the target position to which the vehicle 100 should head next, and generate the route from the current position of the vehicle 100 represented by the acquired vehicle position information to the target position. The server 200 may generate a route to the target position between the current position and the destination or may generate a route to the destination. The server 200 may transmit the generated route to the vehicle 100. The vehicle 100 may generate the traveling control signal for causing the vehicle 100 to travel on the route received from the server 200, and control the actuator group 120 by using the generated traveling control signal.
(2) The server 200 may acquire the vehicle position information and transmit the acquired vehicle position information to the vehicle 100. The vehicle 100 may decide the target position to which the vehicle 100 should head next, generate the route from the current position of the vehicle 100 represented by the received vehicle position information to the target position, generate the traveling control signal such that the vehicle 100 travels on the generated route, and control the actuator group 120 by using the generated traveling control signal.
(3) In each of the above-described forms (1) and (2), an internal sensor may be mounted on the vehicle 100, and a detection result output from the internal sensor may be used for at least one of the generation of the route and the generation of the traveling control signal. The internal sensor is a sensor mounted in the vehicle 100. The internal sensor may include, for example, a sensor that detects a motion state of the vehicle 100, a sensor that detects an operation state of each unit of the vehicle 100, or a sensor that detects a surrounding environment of the vehicle 100. Specifically, the internal sensor may include, for example, a camera, a LiDAR, a millimeter wave radar, an ultrasound sensor, a GPS sensor, an acceleration sensor, and a gyro sensor. For example, in the above-described form (1), the server 200 may acquire the detection result of the internal sensor and reflect the detection result of the internal sensor in the route when the route is generated. In the above-described form (1), the vehicle 100 may acquire the detection result of the internal sensor and reflect the detection result of the internal sensor to the traveling control signal when the traveling control signal is generated. In the above-described form (2), the vehicle 100 may acquire the detection result of the internal sensor and reflect the detection result of the internal sensor to the route when the route is generated. In the above-described form (2), the vehicle 100 may acquire the detection result of the internal sensor and reflect the detection result of the internal sensor to the traveling control signal when the traveling control signal is generated.

(E11) In the fourth embodiment, an internal sensor may be mounted on the vehicle 100v, and a detection result output from the internal sensor may be used for at least one of the generation of the route and the generation of the traveling control signal. For example, the vehicle 100v may acquire the detection result of the internal sensor and reflect the detection result of the internal sensor to the route when the route is generated. The vehicle 100v may acquire the detection result of the internal sensor and reflect the detection result of the internal sensor to the traveling control signal when the traveling control signal is generated.

(E12) In the fourth embodiment, the vehicle 100v acquires the vehicle position information by using the detection result from the external sensor 300. On the other hand, the internal sensor may be mounted in the vehicle 100v, and the vehicle 100v may acquire the vehicle position information by using the detection result of the internal sensor, decide the target position to which the vehicle 100v should head next, generate the route from the current position of the vehicle 100v represented by the acquired vehicle position information to the target position, generate the traveling control signal for traveling on the generated route, and control the actuator group 120 by using the generated traveling control signal. In this case, the vehicle 100v can travel without using the detection result of the external sensor 300 at all. The vehicle 100v may acquire a target arrival time or traffic jam information from the outside of the vehicle 100v and reflect the target arrival time or the traffic jam information to at least one of the route and the traveling control signal. In addition, all of the functions of the system 50v may be provided in the vehicle 100v. That is, the processing implemented by the system 50v according to the present disclosure may be implemented by the vehicle 100v alone.

(E13) The vehicle 100 may be manufactured by combining a plurality of modules. The module means a unit configured by a plurality of components assembled depending on the part or the function of the vehicle 100. For example, the platform of the vehicle 100 may be manufactured by combining a front module that constitutes a front portion of the platform, a center module that constitutes a center portion of the platform, and a rear module that constitutes a rear portion of the platform. In addition, the number of the modules constituting the platform is not limited to three, and may be two or less or four or more. In addition to or instead of the components constituting the platform, the components constituting a portion of the vehicle 100 that is different from the platform may be modularized. In addition, various modules may include any exterior component, such as a bumper or a grille, or any interior component, such as a seat or a console. Such a module may be manufactured, for example, by joining the components via welding, a fastener, or the like, or may be manufactured by integrally molding at least a part of the components constituting the modules as one component via casting. A molding method of integrally molding one component, particularly a relatively large component, is also called giga casting or mega casting. For example, the front module, the center module, and the rear module may be manufactured by using giga casting.

(E14) The transport of the vehicle 100 using the traveling of the vehicle 100 via the unmanned driving is also referred to as "autonomous transport". A configuration for implementing the autonomous transport is also referred to as "vehicle remote control autonomous driving transport system". A production method of producing the vehicle 100 by using the autonomous transport is also referred to as "autonomous production". In the autonomous production, for example, at the factory FC that manufactures the vehicle 100, at least a part of the transport of the vehicle 100 is implemented by the autonomous transport.

(E15) In each of the above-described embodiments, a part or all of the functions and the processing that are implemented by software may be implemented by hardware. Alternatively, a part or all of the functions and the processing that are implemented by hardware may be implemented by software. As the hardware for implementing various functions in each of the above-described embodiments, various circuits, such as an integrated circuit or a discrete circuit, may be used.

The present disclosure is not limited to the above-described embodiments, and can be implemented with various configurations without departing from the gist of the present disclosure. For example, the technical features in the embodiments corresponding to the technical features in the respective forms described in SUMMARY OF THE INVENTION can be replaced or combined as appropriate to solve the above-described objects, or to achieve a part or all of the above-described effects, within the scope of the claims. In a case where the technical features are not described as being always needed in the present specification, the features can be deleted as appropriate.

## Claims

1. A monitoring device that, in a factory (FC) in which a plurality of processes for manufacturing a vehicle (100) that travels via unmanned driving is performed, monitors the vehicle (100) that is an object of the processes, **characterized in that** the monitoring device comprises:
a process acquisition unit (210) configured to acquire process information on a process as a target among the processes for the vehicle (100);
a torque acquisition unit (220) configured to acquire torque information on an output torque of the vehicle (100) in the process as the target; and
a detection unit configured to detect an abnormality in the output torque of the vehicle (100) by using the process information and the torque information.

2. The monitoring device according to claim 1, wherein the detection unit is configured to detect the abnormality in the output torque based on the output torque of the vehicle (100) represented by the torque information, the process represented by the process information, and a torque-related criterion set in association with the process.

3. The monitoring device according to claim 2, wherein:
a threshold value of the output torque in the process is set as the torque-related criterion; and
the detection unit is configured to, when a value of the output torque is greater than the threshold value of the output torque, determine that there is the abnormality in the output torque of the vehicle (100).

4. The monitoring device according to claim 3, wherein, as a first threshold value of the output torque set for a first process among the processes, a value smaller than a second threshold value of the output torque set for a second process that is performed later than the first process is set.

5. The monitoring device according to claim 2, wherein the torque-related criterion is a criterion related to a waveform representing the output torque acquired in time series.

6. The monitoring device according to any one of claims 1 to 5, further comprising a control instruction generation unit configured to generate a control instruction for remotely controlling driving of the vehicle (100) and transmit the generated control instruction to the vehicle (100), wherein:
the detection unit is configured to, when the abnormality in the output torque of the vehicle (100) is detected, notify the control instruction generation unit that the abnormality in the output torque is detected; and
the control instruction generation unit is configured to, when being notified of the abnormality in the output torque, generate the control instruction to stop the vehicle (100) or to reduce a traveling speed of the vehicle (100) to a speed lower than a current speed.

7. The monitoring device according to claim 1, further comprising a notification unit configured to, when the detection unit detects the abnormality in the output torque of the vehicle (100), notify the vehicle (100) that the abnormality in the output torque of the vehicle is detected.

8. A computer-implemented method of, in a factory (FC) in which a plurality of processes for manufacturing a vehicle (100) that travels via unmanned driving is performed, monitoring the vehicle (100) that is an object of the processes, the method **characterized in**:
acquiring process information on a process as a target among the processes for the vehicle (100);
acquiring torque information on an output torque of the vehicle (100) in the process as the target; and
detecting an abnormality in the output torque of the vehicle (100) by using the process information and the torque information.

## Patentansprüche

1. Überwachungsvorrichtung, die, in einer Fabrik (FC), in der einer Vielzahl von Prozessen zur Herstellung eines Fahrzeugs (100), das sich über unbemanntes Fahren fortbewegt, durchgeführt wird, das Fahrzeug (100) überwacht, das ein Objekt des Prozesses ist, **dadurch gekennzeichnet, dass** die Überwachungsvorrichtung Folgendes umfasst:
eine Prozessbeschaffungseinheit (210), die konfiguriert ist, um Prozessinformationen zu einem Prozess als ein Ziel aus den Prozessen für das Fahrzeug (100) zu beschaffen;
eine Drehmomentbeschaffungseinheit (220), die konfiguriert ist, um Drehmomentinformationen zu einem Ausgangsdrehmoment des Fahrzeugs (100) im Prozess als das Ziel zu beschaffen; und
eine Erfassungseinheit, die konfiguriert ist, um eine Anomalie im Ausgangsdrehmoment des Fahrzeugs (100) durch Verwenden der Prozessinformationen und der Drehmomentinformationen zu erfassen.

2. Überwachungsvorrichtung nach Anspruch 1, wobei die Erfassungseinheit konfiguriert ist, um die Anomalie im Ausgangsdrehmoment zu erfassen, basierend auf dem Ausgangsdrehmoment des Fahrzeugs (100), dargestellt durch die Drehmomentinformationen, dem Prozess, dargestellt durch die Prozessinformationen, und einem Drehmoment-bezogenen Kriterium, festgelegt im Zusammenhang mit dem Prozess.

3. Überwachungsvorrichtung nach Anspruch 2, wobei:
ein Schwellenwert des Ausgangsdrehmoments im Prozess als das Drehmoment-bezogene Kriterium festgelegt ist; und
die Erfassungseinheit konfiguriert ist, um, wenn ein Wert des Ausgangsdrehmoments größer als der Schwellenwert des Ausgangsdrehmoments ist, zu bestimmen, dass es die Anomalie im Ausgangsdrehmoment des Fahrzeugs (100) gibt.

4. Überwachungsvorrichtung nach Anspruch 3, wobei, als ein erster Schwellenwert des Ausgangsdrehmoments, festgelegt für einen ersten Prozess aus den Prozessen, ein Wert, der kleiner als ein zweiter Schwellenwert des Ausgangsdrehmoments ist, für einen zweiten Prozess festgelegt ist, der später durchgeführt wird, als der erste Prozess festgelegt ist.

5. Überwachungsvorrichtung nach Anspruch 2, wobei das Drehmoment-bezogene Kriterium ein Kriterium in Bezug auf eine Wellenform ist, die das Ausgangsdrehmoment darstellt, das in Zeitreihe beschaffen wird.

6. Überwachungsvorrichtung nach einem der Ansprüche 1 bis 5, ferner umfassend eine Steueranweisung-Erzeugungseinheit, die konfiguriert ist, um eine Steueranweisung zum entfernten Steuern des Fahrens des Fahrzeugs (100) zu erzeugen und die erzeugte Steueranweisung an das Fahrzeug (100) zu übertragen, wobei:
die Erfassungseinheit konfiguriert ist, um, wenn die Anomalie im Ausgangsdrehmoment des Fahrzeugs (100) erfasst wird, die Steueranweisung-Erzeugungseinheit zu benachrichtigen, dass die Anomalie im Ausgangsdrehmoment erfasst wird; und
die Steueranweisung-Erzeugungseinheit konfiguriert ist, um, wenn über die Anomalie im Ausgangsdrehmoment benachrichtigt wird, die Steueranweisung zu generieren, um das Fahrzeug (100) anzuhalten oder um eine Fahrtgeschwindigkeit des Fahrzeugs (100) auf eine Geschwindigkeit zu verringern, die niedriger als eine aktuelle Geschwindigkeit ist.

7. Überwachungsvorrichtung nach Anspruch 1, ferner umfassend eine Benachrichtigungseinheit, die konfiguriert ist, um, wenn die Erfassungseinheit die Anomalie im Ausgangsdrehmoment des Fahrzeugs (100) erfasst, das Fahrzeug (100) zu benachrichtigen, dass die Anomalie im Ausgangsdrehmoment des Fahrzeugs erfasst wird.

8. Computerimplementiertes Verfahren, in einer Fabrik (FC), in der einer Vielzahl von Prozessen zur Herstellung eines Fahrzeugs (100), das sich über unbemanntes Fahren fortbewegt, durchgeführt wird, des Überwachens des Fahrzeugs (100), das ein Objekt des Prozesses ist, wobei das Verfahren durch Folgendes gekennzeichnet ist:
Beschaffen von Prozessinformationen zu einem Prozess als ein Ziel aus den Prozessen für das Fahrzeug (100);
Beschaffen von Drehmomentinformationen zu einem Ausgangsdrehmoment des Fahrzeugs (100) im Prozess als das Ziel; und
Erfassen einer Anomalie im Ausgangsdrehmoment des Fahrzeugs (100) durch Verwenden der Prozessinformationen und der Drehmomentinformationen.

## Revendications

1. Dispositif de surveillance qui, dans une usine (FC) dans laquelle une pluralité de processus de fabrication d'un véhicule (100) qui se déplace par conduite sans pilote sont réalisés, surveille le véhicule (100) qui est un objet des processus, **caractérisé en ce que** le dispositif de surveillance comprend :
une unité d'acquisition de processus (210) configurée pour acquérir des informations de processus sur un processus cible parmi les processus pour le véhicule (100) ;
une unité d'acquisition de couple (220) configurée pour acquérir des informations de couple sur un couple de sortie du véhicule (100) dans le processus en tant que cible ; et
une unité de détection configurée pour détecter une anomalie dans le couple de sortie du véhicule (100) en utilisant les informations de processus et les informations de couple.

2. Dispositif de surveillance selon la revendication 1, dans lequel l'unité de détection est configurée pour détecter l'anomalie dans le couple de sortie sur la base du couple de sortie du véhicule (100) représenté par les informations de couple, du processus représenté par les informations de processus, et d'un critère lié au couple défini en association avec le processus.

3. Dispositif de surveillance selon la revendication 2, dans lequel :
une valeur seuil de couple de sortie dans le processus est définie en tant que critère lié au couple ; et
l'unité de détection est configurée pour, lorsqu'une valeur du couple de sortie est supérieure à la valeur seuil du couple de sortie, déterminer qu'il existe anomalie dans le couple de sortie du véhicule (100).

4. Dispositif de surveillance selon la revendication 3, dans lequel, en tant que première valeur seuil du couple de sortie définie pour un premier processus parmi la pluralité de processus, une valeur inférieure à une deuxième valeur seuil du couple de sortie défini pour un deuxième processus réalisé après le premier processus est définie.

5. Dispositif de surveillance selon la revendication 2, dans lequel le critère lié au couple est un critère lié à une forme d'onde représentant le couple de sortie acquis en série chronologique.

6. Dispositif de surveillance selon l'une quelconque des revendications 1 à 5, comprenant en outre une unité de génération d'instruction de commande conçue pour générer une instruction de commande destinée à commander à distance la conduite du véhicule (100) et transmettre l'instruction de commande générée au véhicule (100), dans lequel :
l'unité de détection est configurée pour, lorsque que l'anomalie dans le couple de sortie du véhicule (100) est détectée, notifier l'unité de génération d'instruction de commande du fait que l'anomalie dans le couple de sortie est détectée ; et
l'unité de génération d'instruction de commande est configurée pour, lorsqu'elle est notifiée de l'anomalie dans le couple de sortie, générer l'instruction de commande pour arrêter le véhicule (100) ou pour réduire une vitesse de déplacement du véhicule (100) à une vitesse plus faible que la vitesse actuelle.

7. Dispositif de surveillance selon la revendication 1, comprenant en outre une unité de notification configurée pour, lorsque l'unité de détection détecte l'anomalie dans le couple de sortie du véhicule (100), notifier le véhicule (100) du fait que l'anomalie dans le couple de sortie du véhicule est détectée.

8. Procédé mis en œuvre par ordinateur consistant à, dans une usine (FC) dans laquelle une pluralité de processus de fabrication d'un véhicule (100) qui se déplace par conduite sans pilote sont réalisés, surveiller le véhicule (100) qui est un objet des processus, le procédé étant **caractérisé par** :
l'acquisition d'informations de processus sur un processus en tant que cible parmi les processus pour le véhicule (100) ;
l'acquisition d'informations de couple sur un couple de sortie du véhicule (100) dans le processus en tant que cible ; et
la détection d'une anomalie dans le couple de sortie du véhicule (100) en utilisant les informations de processus et les informations de couple.
